# EUROPÄISCHE PATENTSCHRIFT

(11) **EP 1 960 226 B1**
(45) Veröffentlichungstag und Bekanntmachung des Hinweises auf die Patenterteilung: **11.08.2010**
(21) Anmeldenummer: 06830462.5
(22) Anmeldetag: 08.12.2006
(51) Int. Cl.: B60K 35/00, H04R 7/04

(54) **ANZEIGEGERÄT, INSBESONDERE BILDSCHIRM**
DISPLAY DEVICE, IN PARTICULAR A SCREEN
APPAREIL D'AFFICHAGE, NOTAMMENT ECRAN

(30) Priorität: 09.12.2005 DE 102005058825
(43) Veröffentlichungstag der Anmeldung: 27.08.2008
(73) Patentinhaber: ROBERT BOSCH GMBH, 70442 Stuttgart (DE)
(72) Erfinder: GRABSCH, Hans-Peter, 71034 Boeblingen (DE); FISCHER, Michael, 75223 Niefern-Oeschelbronn (DE)
(86) Internationale Anmeldenummer: PCT/EP2006/069458
(87) Internationale Veröffentlichungsnummer: WO 2007/065938

(56) Entgegenhaltungen:
- EP-A- 1 542 064
- WO-A-00/02417
- GB-A- 2 351 200

## Beschreibung

### Technisches Gebiet

Die Erfindung betrifft ein Anzeigegerät nach dem Oberbegriff des Anspruches 1.

### Stand der Technik

Bekannt sind Flachbildschirme für PCs, Laptops und dergleichen, die integrierte Lautsprecher aufweisen. Dadurch ist eine kompakte Bauform gegeben. Sie können leicht umgestellt werden, ohne dass externe Lautsprecher entsprechend umgestellt werden müssen. Außerdem entfallen externe Anschlusskabel, was besonders bequem ist. Bei derartigen Bildschirmen können jedoch die Lautsprecher leicht durch davorstehende Gegenstände in ihrem Klang beeinträchtigt werden. Außerdem ist es beispielsweise in Großraumbüros sehr störend, wenn eine Vielzahl derartiger Bildschirme aufgestellt ist, so dass eine unangenehme und störende Geräuschkulisse entsteht.

In Kraftfahrzeugen sind ebenfalls die unterschiedlichsten Anzeigegeräte und Kombinationsanzeigegeräte mit Drehzahlmesser und Tachometer bekannt. Auch hier ist das Problem gegeben, dass bei der Anordnung konventioneller Lautsprecher nicht nur Bauraum benötigt wird, sondern auch keine gezielte Information von Fahrer oder Beifahrer möglich ist.

Die GB-A-2 351 200 offenbart ein Anzeigegerät mit einem optischen Anzeigefeld und mit mindestens einem Lautsprecher, wobei der Lautsprecher als transparenter Folienlautsprecher ausgeführt ist, der auf dem Anzeigefeld angeordnet ist.

### Darstellung der Erfindung, Aufgabe, Lösung, Vorteile

Der Erfindung liegt die Aufgabe zugrunde, ein Anzeigegerät der eingangs genannten Art zu schaffen, das unter allen Umständen eine optimale Klangwiedergabe gewährleistet, wobei eine Audiowiedergabe nur auf eine vor dem Anzeigegerät befindliche Person gerichtet ist.

Diese Aufgabe wird durch ein Anzeigegerät mit den Merkmalen des Anspruches 1 gelöst.

Durch das erfindungsgemäße Anzeigegerät kann der Lautsprecher nicht mehr so leicht verdeckt oder blockiert werden, da das Sichtfeld bzw. das optische Display immer sichtbar sein muss. Die Anordnung auf dem Anzeigefeld ist möglich durch die transparente Ausführung des Lautsprechers. Durch seine als Folie ausgebildete, flache Bauweise ist eine Integration in einem Bildschirm, insbesondere in einem Flachbildschirm, leicht umsetzbar.

Der erfindungsgemäße Lautsprecher erlaubt darüber hinaus, dass eine Klangwiedergabe nur auf eine vor dem Anzeigegerät bzw. dem Bildschirm befindliche Person gerichtet ist, so dass keine Beschallung auf andere unbeteiligte Personen entsteht.

Ein auf die erfindungsgemäße Weise gestaltetes Anzeigegerät ist zudem sehr kompakt, da kein zusätzlicher Bauraum für zusätzliche Lautsprecher erforderlich ist.

Bei einer Anwendung im Kfz liegen die Vorteile sowohl in dem wegfallenden Bauraum als auch in der Richtwirkung. Durch die Richtwirkung des Wandlerprinzips wird die Umgebung weniger gestört. Es wird z.B. nur der Fahrer informiert, die Fahrgäste bleiben weitgehend unbehelligt von Hinweisen und Warnungen von Fahrerassistenzsystemen.

Bei einem erfindungsgemäßen Anzeigegerät ist vorgesehen, dass der Folienlautsprecher durch ein eine Trägerfrequenz mit einem Audiosignal sendendes Übertragungselement aktivierbar ausgebildet ist, wobei das Übertragungselement für eine gerichtete Audioübertragung ausgeführt ist. Auf diese Weise kann das Audiosignal auf dem Bildschirm durch die Trägerfrequenz praktisch ähnlich einem Funksignal übertragen werden, so dass keine Übertragungsleitungen auf dem Weg vom Übertragungselement zur Folie benötigt werden.

In einer bevorzugten Ausführungsform weist das Übertragungselement eine Trägerfrequenz zwischen 100 kHz und 200 kHz, insbesondere 180 kHz auf. Durch diese relativ hohe Trägerfrequenz sind sehr kurze Abstände vom Ort der Folie zum Ort, an dem der Audioschall gut zu hören ist, möglich. Insbesondere für Flachbildschirme ist eine solche Bauweise wichtig. Mit mehreren Trägerfrequenzen lassen sich vorteilhafterweise unterschiedliche Richtungen bedienen.

Zweckmäßigerweise ist das Übertragungselement ein amplitudenmoduliertes Übertragungselement. Eine Amplitudenmodulation ist mit relativ geringem elektronischen Aufwand umzusetzen.

Eine transparente Ausführung des flachen Lautsprechers ist leicht zu fertigen, wenn der Folienlautsprecher als sogenannte Electret-Folie ausgebildet ist. Durch eine entsprechende Prozesstechnik können hohe Trägerfrequenzen von vorzugsweise etwa 180 kHz realisiert werden. Solche Folien lassen sich außerdem so herstellen, dass sie transparent sind. Dabei ist eine Electret-Folie eine Folie, die permanent elektrisch polarisiert wurde.

Auf der Folie selber sind im übertragenen Sinne eine Vielzahl von Lautsprechern ausbildbar, die geeignet zusammengeschaltet einen gerichteten "Schallstrahl" erzeugen, aus dem in einer bestimmten Entfernung (Trägerfrequenz) der Audioschall durch die Nichtlinearität der Luft entsteht. Insofern könnte man eventuell die vielen kleinen Lautsprecher auf der Folie so schalten, dass man zwei gerichtete Audiostrahlen hat, also zwei virtuelle "Lautsprecher". Hierdurch kann das z.B. Anzeigegerät als PC-Bildschirm mit der üblichen Klangwiedergabe eingesetzt werden.

Die Electret-Folie, d.h. eine Folie, die permanent elektrisch polarisiert wurde, wird dabei unter Nutzung des Wandler-Prinzips verwendet.

Durch Anlegen von Wechselspannung an die Electret-Folie wird die Folienoberfläche in Normalen-Richtung bewegt. Diese Bewegungen führen zu einer Schallabstrahlung. Dies funktioniert für hohe Frequenzen besser, da hier nur kleine Auslenkungen der Folienoberfläche benötigt werden. Durch Zusammenschaltung vieler kleiner Bereich der Folienoberfläche zu einem Phased Array, läst sich ein Schallstrahl ausrichten. Der später hörbare Schall wird auf die hohe (Träger)-Frequenz aufmoduliert (Amplitude). Die Umsetzung des hochfrequenten amplitudenmodulierten Schalls in hörbaren Schall erfolgt nach einer gewissen Wegstrecke durch einen Nichtlinearitätseffekt der Luft, ähnlich einem einfachen Demudolator in einem Mittelwellenradio.

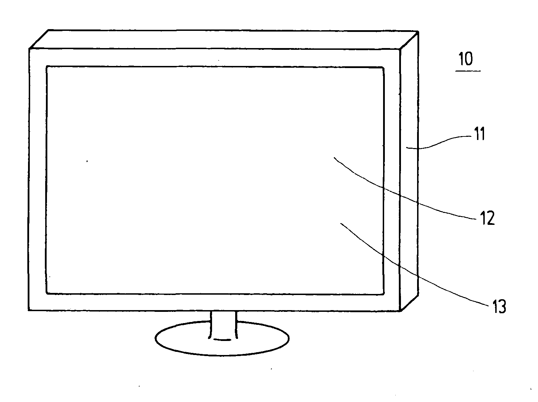

### Kurze Beschreibung der Zeichnung

Ein Ausführungsbeispiel der Erfindung wird anhand der Zeichnung näher erläutert.

Die Figur zeigt in rein schematischer Darstellung einen nach der Erfindung ausgeführten Flachbildschirm, insbesondere ein PC-Monitor.

### Bester Weg zur Ausführung der Erfindung

Die Figur zeigt einen Flachbildschirm 10 mit einem Gehäuse 11, einem optischen Anzeigefeld 13 und einem integrierten Lautsprecher 12.

Der Lautsprecher 12 ist erfindungsgemäß als transparenter Folienlautsprecher ausgeführt und auf dem Anzeigefeld angeordnet. Möglich ist die Unterbringung von zwei beispielsweise nebeneinander angeordneten Folienlautsprechern.

Der Lautsprecher 12 deckt vorzugsweise das gesamte Anzeigefeld 13 ab.

Der als Folienlautsprecher 12 ausgebildete Lautsprecher wird durch ein nicht dargestelltes Übertragungselement betätigt. Das Übertragungselement benutzt eine Trägerfrequenz, auf der ein Audiosignal moduliert und für eine gerichtete Audioübertragung ausgeführt ist. Vorzugsweise weist das Übertragungselement eine Trägerfrequenz von etwa 180 kHz auf. Das Übertragungselement besitzt eine Elektronik, die die Signale amplitudenmoduliert. Der Folienlautsprecher 12 ist als Electret-Folie ausgebildet, so dass sehr kurze Übertragungsabstände zwischen dem Ort der Folie und dem Ort, an dem der Audioschall gut zu hören ist, möglich sind.

Eine Aufbringung der Lautsprecherfolie auf anderen optischen Displays bzw. anderen Bildschirmen oder anderen Geräten, wie beispielsweise auf einem Kombiinstrument in einem Fahrzeug, ist möglich.

Da ein Bauraum für zusätzliche Lautsprecher entfällt sowie der Lautsprecher 12 nicht verdeckt oder blockiert werden kann, weil das optische Display immer sichtbar sein muss, bietet diese Lösung gegenüber bekannten Lösungen erhebliche Vorteile.

## Patentansprüche

1. Anzeigegerät (10), insbesondere Betriebsdatenanzeigegerät oder Kombinationsinstrument oder Bildschirm, mit einem optischen Anzeigefeld (13) und mit mindestens einem, ggf. integrierten, Lautsprecher (12),
wobei der Lautsprecher als transparenter Folienlautsprecher (12) ausgeführt ist, der auf dem Anzeigefeld (13) angeordnet ist, **dadurch gekennzeichnet, dass** der Folienlautspecher (12) durch ein mindestens eine Trägerfrequenz mit einem Audiosignal sendendes Übertragungselement aktivierbar ausgebildet ist, wobei das Übertragungselement für eine gerichtete Audioübertragung ausgeführt ist.

2. Anzeigegerät nach Anspruch 1, **dadurch gekennzeichnet, dass** das Übertragungselement mindestens eine Trägerfrequenz zwischen 100 kHz und 200 kHz, insbesondere von 180 kHz aufweist.

3. Anzeigegerät nach Anspruch 1 oder 2, **dadurch gekennzeichnet, dass** das Übertragungselement ein amplitudenmoduliertes Übertragungselement ist.

4. Anzeigegerät nach einem der Ansprüche 1 bis 3, **dadurch gekennzeichnet, dass** der Folienlautsprecher (12) als Electret-Folie ausgebildet ist.

5. Anzeigegerät nach einem der vorhergehenden Ansprüche, **gekennzeichnet durch** eine Ausbildung als Flachbildschirm.

6. Anzeigegerät nach einem der vorhergehenden Ansprüche, **gekennzeichnet durch** mehrere im Anzeigefeld integrierte virtuelle Lautsprecher.

7. Anzeigegerät nach Anspruch 6, **gekennzeichnet durch** zwei im Anzeigefeld integrierte virtuelle Lautsprecher.

## Claims

1. Display device (10), in particular an operating data display device or combination instrument or screen, having an optical display panel (13) and having at least one, if appropriate integrated, loudspeaker (12), the loudspeaker being embodied as a transparent film loudspeaker (12) which is arranged on the display panel (13), **characterized in that** the film loudspeaker (12) is designed such that it can be activated by a transmission element emitting at least one carrier frequency with the aid of an audio signal, the transmission element being embodied for a directional audio transmission.

2. Display device according to Claim 1, **characterized in that** the transmission element has at least one carrier frequency between 100 kHz and 200 kHz, in particular of 180 kHz.

3. Display device according to Claim 1 or 2, **characterized in that** the transmission element is an amplitude modulated transmission element.

4. Display device according to one of Claims 1 to 3, **characterized in that** the film loudspeaker (12) is designed as an electret film.

5. Display device according to one of the preceding claims, **characterized by** being designed as a flat screen.

6. Display device according to one of the preceding claims, **characterized by** a plurality of virtual loudspeakers integrated in the display panel.

7. Display device according to Claim 6, **characterized by** two virtual loudspeakers integrated in the display panel.

## Revendications

1. Appareil d'affichage (10), en particulier appareil d'affichage de données de fonctionnement, instrument combiné ou écran, présentant un champ (13) d'affichage visuel et au moins un haut-parleur (12) éventuellement intégré,
le haut-parleur étant configuré comme haut-parleur (12) en feuille transparente disposé sur le champ d'affichage (13),
**caractérisé en ce que**
le haut-parleur (12) en feuille est configuré de manière à pouvoir être activé par un élément de transmission émettant au moins une fréquence porteuse et un signal audio, l'élément de transmission étant configuré pour une transmission audio orientée.

2. Appareil d'affichage selon la revendication 1, **caractérisé en ce que** l'élément de transmission présente une ou plusieurs fréquences porteuses comprises entre 100 kHz et 200 kHz et en particulier de 180 kHz.

3. Appareil d'affichage selon les revendications 1 ou 2, **caractérisé en ce que** l'élément de transmission est un élément de transmission modulé en amplitude.

4. Appareil d'affichage selon l'une des revendications 1 à 3, **caractérisé en ce que** le haut-parleur (12) en feuille est configuré comme feuille en électret.

5. Appareil d'affichage selon l'une des revendications précédentes, **caractérisé en ce qu'**il est configuré comme écran plat.

6. Appareil d'affichage selon l'une des revendications précédentes, **caractérisé en ce que** plusieurs haut-parleurs virtuels sont intégrés dans le champ d'affichage.

7. Appareil d'affichage selon la revendication 6, **caractérisé en ce que** deux haut-parleurs virtuels sont intégrés dans le champ d'affichage.
